**Europäisches Patentamt**

**European Patent Office**

**Office européen des brevets**

(19)

(11) **EP 1 188 470 A2**

(12) **EUROPEAN PATENT APPLICATION**

(43) Date of publication:
**20.03.2002 Bulletin 2002/12**

(51) Int Cl.⁷: **B01D 53/04**

(21) Application number: **01122113.2**

(22) Date of filing: **14.09.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.09.2000 US 662754**

(71) Applicant: **PRAXAIR TECHNOLOGY, INC.**
**Danbury, CT 06810-5113 (US)**

(72) Inventors:
• **Smolarek, James**
**Bostob, New York 14025 (US)**

• **Nowobilski, Jeffert John**
**Orchard Park, New York 14127 (US)**
• **Ackley, Mark William**
**East Aurora, New York 14052 (US)**
• **Notaro, Frank**
**Amherst, New York 14226 (US)**

(74) Representative: **Schwan - Schwan - Schorer**
**Patentanwälte**
**European Patent Attorneys**
**Elfenstrasse 32**
**81739 München (DE)**

(54) **Pressure swing adsorption using mixed adsorbent layer**

(57)   The invention includes an adsorbent bed configuration that further includes at least two regions of adsorbents or adsorbent mixtures of uniform composition wherein such regions are separated by a transition zone comprised of a graduated mixture of the materials in the adjacent regions. The interfaces of these layered bed regions do not necessarily coincide with the main separation zones within the adsorbent. The invention further includes apparatus by which the adsorbent materials are loaded into the various regions.

Bed Configuration
Bed Laying and Mixed Transition Region

(aa)  Uniform adsorbent composition layer a
(bb)  Uniform adsorbent composition layer b
(ab)  Gradual mixed transition region

**FIG. 4A**

EP 1 188 470 A2

## Description

### FIELD OF THE INVENTION

This invention relates to pressure swing adsorption (PSA) and vacuum pressure swing adsorption (VPSA) gas separation systems and, more particularly, to a method and apparatus for employing a mixed transition adsorbent layer in PSA and VPSA adsorbent bed systems having two or more layers of adsorbent materials.

### BACKGROUND OF THE INVENTION

Layers of different adsorbents have been introduced in the prior art to address the need for multiple separation zones to remove or separate more than a single component from a gas feed stream. For various reasons, the interface between layers has been distinct to coincide with a sharp boundary between the separation zones. Any layer may consist of either a single adsorbent or a uniform blend of materials. While multilayers with sharp interfaces offer improvements over a single adsorbent in certain applications, they limit the degree to which the adsorption material can be tailored to the process requirements.

The prior art also describes adsorbents that exhibit distinct interface regions due to limitations in the adsorbent loading systems. Prior art adsorbent loading apparatus have provided loading and dense packing of materials, but have been limited in design to loading only a single adsorbent or uniform blend of adsorbents within each region or layer of the adsorbent. Such loading systems are capable of simultaneously loading different adsorbents into separate regions or layers of a radial bed adsorbent.

The prior art teaches a plurality of devices for loading of adsorbents into beds and various arrangements of adsorbents in the respective beds. Such prior art is considered below.

U.S. Patent 5,837,021, entitled "Installation for the Treatment of at Least one fluid, by Passage through two adjacent Masses of Material" describes a dump cart type loader assembly that creates a layered adsorbent within a radial flow adsorbent vessel with a distinctly sharp vertical interface between the layers of materials. The patent also indicates that the layered bed configuration exhibits adsorbents in direct contact with each other.

U.S. Patent 5,931,980, entitled "Installation for the Treatment of at Least One Fluid, by Passage Through Two Adjacent Masses of Material" discloses a layered adsorbent bed within a vessel such as a radial flow adsorbent vessel with a sharp interface between the layers of materials. It is indicated that the bed may exhibit a continuous interface that may be "wavy" in nature.

U.S. Patent 5,176,721, entitled "Adsorbent and Process of the Separation by Adsorption" employs a sequence for loading a cylindrical bed in the horizontal position followed by rotating to the vertical position for operation. This sequence allows for the gravity-enhanced loading of one adsorbent at a time, ultimately achieving vertical layers of adsorbent with a sharp direct-contact interface. This vertically orientated, vertically layered cylindrical bed is then operated with horizontal flow through the layers.

U.S. Patent 5,324,159, entitled "Particle Loader" describes the use of a rotating loader arm assembly for the installation of layers of individual adsorbents. The loader system is particularly suited to loading adsorbents in axial flow beds.

U.S. Patent 5,836,362, entitled "Multiple Adsorbent Loader Method and Apparatus for a Radial Flow Vessel" describes a loader assembly that loads multiple adsorbents into a radial flow bed adsorbent vessel while creating a sharp interface between layers. The material in any layer may be a single adsorbent or a uniform mixture of adsorbents. This patent also describes loading criteria for achieving the desired sharp layer interface.

U.S. Patent 4,964,888, entitled "Multiple Zone Adsorption Process" describes an adsorbent that includes plural layers of adsorbent, the respective layers having different bead sizes selected for mass transfer rate improvement. The patent also describes the presence of a third layer placed between the two layers comprised of a blend of the materials of the adjacent layers. No method is given for the loading such layers.

UK Patent Application 2,300,577 entitled "Sorbing Apparatus" describes an adsorption apparatus with adsorbents of various bead sizes. The Application shows both a layered mesh size bed and a non-layered bed of varying particle size in a manner similar to that of 4,964,888.

There is a need for improved efficiency adsorbent beds for use in PSA and VPSA systems. There is a further need for adsorbent beds that are of lower cost, but which exhibit efficiency improvements.

### SUMMARY OF THE INVENTION

The invention incorporates a mixed adsorbent transition region comprised of a graduated composition of the adjacent layered materials between distinct layers of adsorbents contained within an adsorbent bed. This region of mixed adsorbents results in an improvement in process efficiency and an overall reduction in product cost compared to multilayered systems with sharp interfaces.

A loader assembly incorporating the invention is designed to simultaneously load multiple layers comprising different adsorbents while controlling the mixed transition region between these layers. Further, the loader assembly continuously controls the disposition of materials within this mixed transition region. The depth and composition of adsorbents within the mixed transition region are established by process requirements and implemented by the adsorbent loader installation. The desired material composition gradient within the mixed transition region is graduated from ~100% material of the adjacent layer to a 50% blend somewhere within the region, to ~100% of the other material at the far end of the mixed transition region. Preferably, the minimum depth of the mixed transition region is twenty particle diameters.

BRIEF DESCRIPTION OF THE DRAWINGS

Fig. 1A illustrates a typical VPSA cycle step diagram.

Fig. 1B illustrates typical VPSA process conditions.

Fig. 2 illustrates bed adsorption zones.

Fig. 3 illustrates average bed temperature profiles at the end of adsorption and desorption steps.

Fig. 4A illustrates a mixed transition bed configuration exploiting adsorber bed temperature profiles.

Fig. 4B illustrates a mixed transition bed configuration exploiting bead size variation.

Fig. 4C illustrates nitrogen concentration distribution at the end of adsorption for LiX at 1.6mm average particle diameter.

Fig. 4D illustrates nitrogen concentration distribution at the end of adsorption for LiX at 1.13mm average particle diameter.

Fig. 5A illustrates an axial bed loader arm assembly in accord with an embodiment of the invention.

Fig. 5B illustrates an sectional view of an axial bed loader arm.

Fig. 5C illustrates valve plates that are incorporated into axial bed loader arm to control adsorbent flow therefrom.

Fig. 6A illustrates a radial bed loader arm assembly in accord with an embodiment of the invention.

Fig. 6B illustrates an sectional view of a radial bed loader arm.

Fig. 6C illustrates apertures that are incorporated into channels of the radial bed loader arm to enable creation of a mixed adsorbent region in the radial bed.

Fig. 7 illustrates region thickness versus drop height.

Fig. 8 illustrates region thickness verses loading flux.

Fig. 9 illustrates region thickness versus partition length.

DETAILED DESCRIPTION OF THE PREFERRED EMBODIMENT

In brief, this invention comprises an adsorbent bed configuration that includes at least two regions of adsorbents or adsorbent mixtures of uniform composition wherein such regions are separated by a transition zone comprised of a graduated mixture of the materials in the adjacent regions. The interfaces of these layered bed regions do not necessarily coincide with the main separation zones within the adsorbent. The invention further includes a means by which the adsorbent materials are loaded into the various regions.

**Mixed transition region layered bed configuration**

The mixed or transition region of the invention exhibits thermodynamic, kinetic and physical properties related to those of the materials in the adjacent adsorbent layers. Surprisingly, the proper selection and graduation of adsorbents in the mixed region can lead to enhanced process performance. Representative enhancements include increased working capacity, higher selectivity, reduced thermal cycling, lower pressure drop, etc. The type and degree of enhancement depends upon the process, the adsorbents and the depth of the graduated mixture region. Thus, the benefits from applying the inventive mixed transition region can be realized for many different types of separations and adsorbent configurations.

It has been discovered that the properties of the mixture of adsorbents in the transition region interact with the local process conditions to provide better separation efficiency than otherwise would have been attained with essentially no mixing of the material from the adjacent layers, (i.e. in layered absorbent beds having a sharp interface between the layers). It is this discovery that results in an improvement in performance.

A summary of the benefits of the mixed adsorbent transition region is as follows:

    1) Reduced thermal cycling:

        by graduated mixing of strong adsorbent(s) with weaker adsorbent(s); or
        by graduated mixing adsorbents with heat sink materials; or
        both;

        - achieves lower bed size and reduced purge and lower power requirements.

    2) Improved adsorbent performance by matching adsorbent composition with bed operating temperatures; and/or

        by graduated mixing of the adsorbents;

        - achieves higher adiabatic separation factor, lower power, smaller bed size factors and reduced adsorbent cost.

    3) Lower pressure drop by graduated mixing of different particle size materials:

-    lowers power requirements.

4) Increased mass transfer rate by graduated mixing of adsorbents of different average particle sizes:

reduces size of mass transfer zone, increasing oxygen recovery and/or purity while increasing adsorbent productivity.

Two examples described below will serve to demonstrate the benefits of a mixed transition region: 1) the integration of adsorbent mixture thermodynamics with thermal cycling and local temperature gradients, and 2) the use of a mixture of adsorbents with different average granulometries to ease the transition of the mass transfer zone as it moves between layers of adsorbents of different average particle size.

The invention is applicable to pressure swing adsorption and/or temperature swing adsorption systems having one or more beds and is not dependent upon a particular gas separation or process cycle.

Process performance is improved due to the selection and mixing of adsorbents to enhance adsorption thermodynamics at the specific temperatures within each region of the adsorbent.

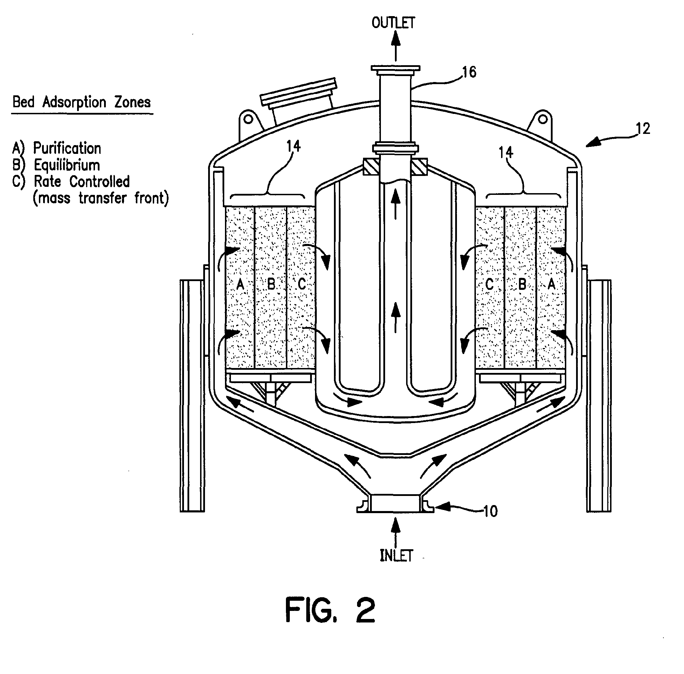

During operation of an adsorption process, distinct separation zones exist or develop within an adsorbent bed. Fig. 2 illustrates these zones. Feed is introduced into the bottom end 10 of vessel 12 and then into zone A of radial adsorbents 14. Zone A is responsible for feed prepurification, specifically the removal of water and $CO_2$. After leaving zone A, the fluid enters a main gas separation zone B. This is the zone where the majority of the desired bulk gas separation occurs. At the end of the adsorption step, zone B is in equilibrium with the feed gas and this is termed the "equilibrium zone". A mass transfer front develops at the beginning of the adsorption step in zone B and traverses zone B until it comes to rest in zone C. The adsorption step is halted prior to eruption of the mass transfer front from the end of zone C to preserve the purity of the product. Product gas is produced and removed at the exit of zone C where it then flows to outlet 16 at the top of vessel 12. Zone C is termed the "mass transfer" zone.

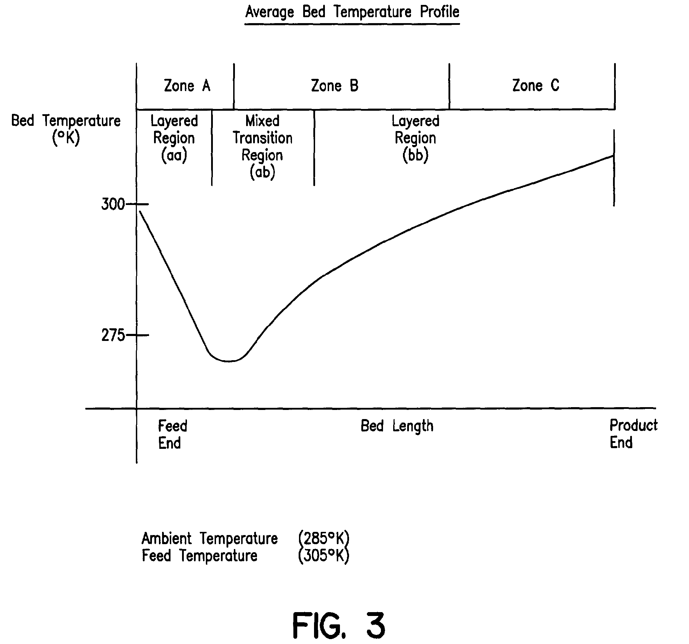

In an adsorption process, a gradient in temperature develops within the bed. This gradient remains in the bed throughout all of the cycle steps once the cycle has reached its steady state operation. However, the temperature of each location in the bed (each local point on the gradient) fluctuates with each step in the cycle. This produces a "thermal swing" for each location within the adsorbent bed. The upper and lower boundaries of this thermal swing, and thus the boundaries of the temperature gradient, are established at the end of the adsorption and desorption steps, respectively. An example of such temperature gradients and the resultant thermal swing is given in Figure 3 for a layered bed including NaX and LiX adsorbent in a VPSA air separation process. In this example, different adsorbents are used in order to affect different separations. Thus the sole purpose of the NaX is to remove $CO_2$ and $H_2O$ from the feed air prior to nitrogen removal by the LiX.

These local bed temperature oscillations (or thermal swings), the direct result of the heats of adsorption and the sequential adsorption and desorption steps, have an adverse effect upon the process. This is due to the fact that the lowest local temperatures occur during the desorption period, while the highest temperatures occur during the adsorption period. These adverse bed temperature excursions result in increased purging and reduced adsorbent capacity, thereby lowering the efficiency of the adsorbent.

All pressure swing processes exhibit both thermal cycling within the bed and a characteristic temperature gradient. It should be understood that these temperature gradients may be different for different separations, adsorbents and/or process conditions. Furthermore, the thermal profiles can also be altered with heat transfer devices in the bed. This invention is not limited to any specific example of temperature gradient, but rather addresses the existence of such gradients.

Characteristics of the bed temperature gradient:

As indicated above, Fig. 3 shows a typical temperature gradient along the bed length for a VPSA air separation cycle. The bottom or feed end of the adsorbent operates at nearly the same or at a slightly lower temperature as the feed inlet temperature. A relatively rapid temperature depression then takes place, reaching a minimum temperature in the lower sections of the adsorbent just at the exit of prepurification zone A. The temperature then gradually increases along zones B and C as the product end is approached. The maximum temperature is typically reached near the top of the adsorbent at the product end.

Adsorbents can be selected for this or other processes to operate in regions of the adsorber where adsorbent characteristics are tailored to this temperature profile.

Further according to the invention, mixed transition regions can be used to reduce the adverse effects of thermal cycling by integrating the adsorbent mixture properties with the local temperature conditions in the bed. This is accomplished by introducing a material which acts as a heat sink, or by using a weaker adsorbent with a lower heat of adsorption. Mixed regions can be deployed to reduce this unwanted thermal cycling, increase the adsorption efficiency and improve process performance.

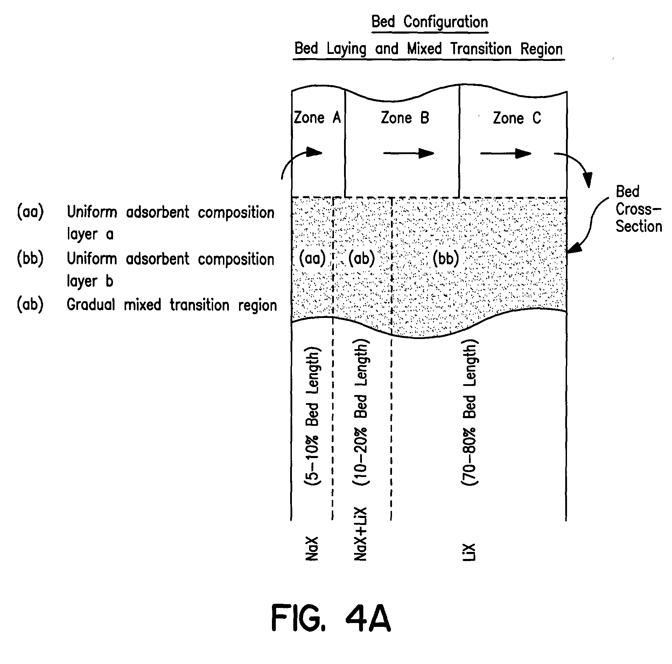

Fig. 4A shows a bed configuration employing a mixed transition region that exploits the temperature conditions present in the bed. The process performance is improved by selecting and layering adsorbents on each side of a mixed transition region according to the adsorption properties of the individual adsorbents and their mixtures and tailored to the local temperature conditions in the bed. Surprisingly, this improved performance is achieved with adsorbent configuration boundaries (aa/ab and ab/bb) that do not necessarily coincide with the separation boundaries (A/B and B/C). Through the combination of distinct layered adsorbent regions with the mixed transition region between the two, the adiabatic separation factor is maximized at each temperature along the bed length. A discussion of the adiabatic separation factor is disclosed in commonly assigned US Patent 6,027,548.

In the example described in Figure 4A above, the bed is configured with NaX in region (aa). The adsorbent in region aa is operating in the prepurification zone (zone A) of the adsorbent with a rapidly falling temperature profile. This region comprises about 5-10% of the total adsorbent. Region bb contains LiX and occupies all of zone C and part of zone B of the adsorbent. This region contains about 70-80% of the total adsorbent

A mixed transition region (ab) is inserted between the layers of the individual LiX and NaX adsorbents. The lower end of this region is 100% NaX at the boundary aa/ab, and the composition of this region gradually increases in LiX until 100% LiX is reached at the boundary ab/bb. The length of region ab (also called the depth of ab) is tailored to achieve the maximum performance in the continuously varying low temperature region near the entrance of the main separation zone (zone B).The required size of the transition region (ab) depends upon the process conditions and the adsorbents. The size of the transition region is thus established upon the basis of the thermal state of the adsorbent in the bed and upon the separation characteristics of the adsorbent mixture.

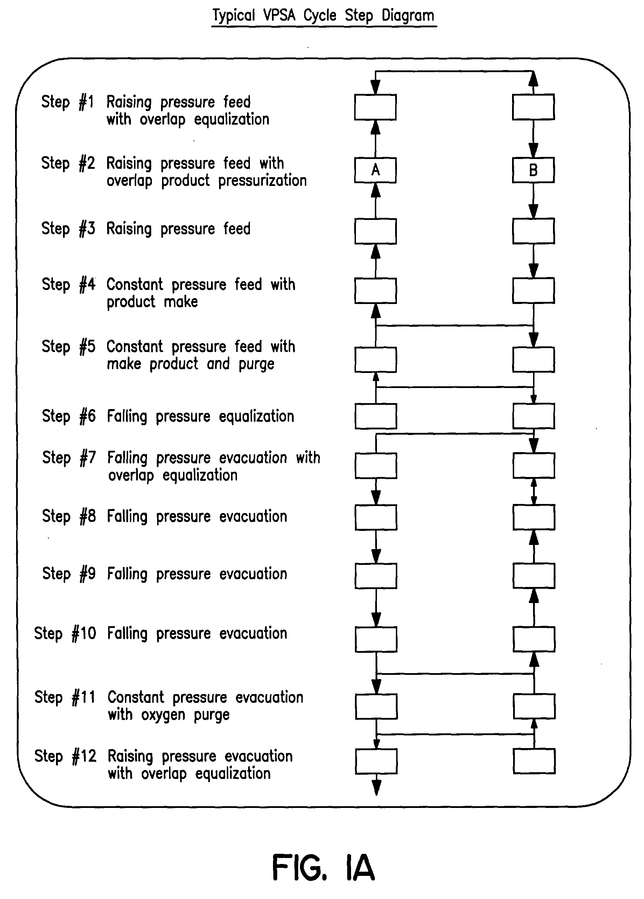

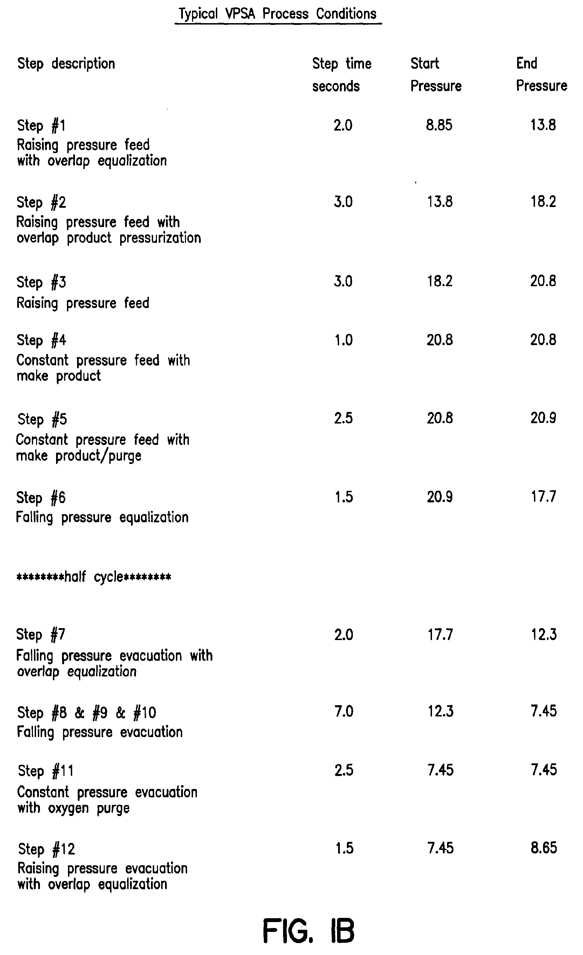

For the exemplified materials, using the process of US Patent 6,010,555 (commonly assigned) and illustrated in Figures 1A-1B, the ideal transition region comprises about 10% to about 25% of the overall bed length with that part of the LiX zone where the bed temperature is predominately below about 300-305K in all steps of the cycle being replaced with a graduated mixture of LiX and NaX. As a general rule, it is preferred that the transition region thickness not be smaller than about twenty particle diameters:

$$TR \geq 20\left(\frac{d_{p1} + d_{p2}}{2}\right)$$

where $d_{p1}$ and $d_{p2}$ are the average particle sizes of the adsorbents in the graduated mixture. This lower limit is established to insure a sufficient bed length for providing the graduated mixture. In application of the invention, a very steep temperature gradient would result in a shorter mixed region, while a shallow gradient would result in a longer mixed region.

We should note that for the purpose of this disclosure, particle size and particle diameter is defined as the average diameter of all of the particles within an adsorbent region. It is understood by those skilled in the art that commercial adsorbents are typically provided in a range of mesh sizes characterized by an average particle diameter. . It is understood by those skilled in the art that commercial adsorbents are typically supplied as a distribution of particle sizes.

In the example above, mixed transition region (ab) allows for the use of additional quantities of NaX, and thereby reduced quantities of the more expensive LiX material. This is possible by capturing the increased separation efficiency of the adsorbent mixture in the lower local temperature regions of the bed.

Thus by mixing the two adsorbents, the overall adsorbent cost for the process can also be lowered. Thus selecting the transition region mixture gradient and region depth to maximize adsorbent efficiency results in an overall process improvement and cost reduction of the product.

The transition region of the invention may also be used to minimize pressure drop and to optimize rate effects.

The flow of fluid through an adsorbent bed is affected by adsorption and desorption, bed geometry changes, temperature and pressure. The superficial velocity of the bulk flow, influenced by all of these factors, varies over the entire length of the bed. Thus a pressure gradient develops across the adsorbent bed. Such undesirable pressure gradients are present in all steps of the PSA cycle and reduce overall process performance.

The largest gradients exist at the bottom of the adsorbent due to the high feed and evacuation flows which exist in these regions. The pressure gradient is lower at the upper end of the adsorbent due to the reduced flows in this region of the bed. Such bed pressure drop is undesirable and results in reduced separation efficiency.

It is known that localized pressure gradients can be altered by using larger particles. A second means of pressure gradient control is through the control of the adsorbent particle size distribution within a region.

Mass Transfer rate effects:

During the adsorption step of a typical PSA process an adsorption front propagates through the bed in the direction of the feed flow. This mass transfer front is affected by the adsorbent characteristics, gas flow and the specific process steps and times.

In the lower regions of the adsorbent bed, the adsorbent becomes saturated as the mass transfer front passes by and these regions have sufficient time to reach equilibrium with the feed. Thus the separation efficiency of this lower region is controlled by the equilibrium characteristics of the adsorbent and the conditions of the process. The mass transfer zone (MTZ) comes to rest in the upper region of the adsorbent at the end of the adsorption step. The separation efficiency is dominated by the mass transfer rate characteristics of the material in this zone.

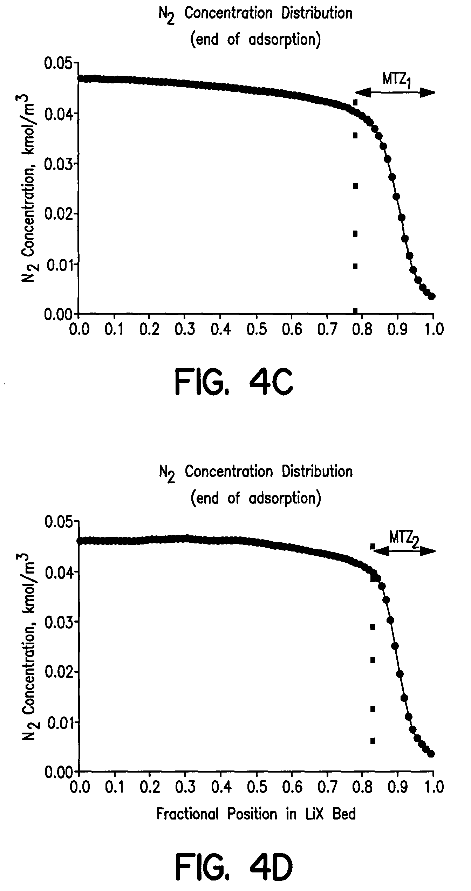

The length of the MTZ affects the overall performance of the process. The MTZ is almost entirely contained at the product end of the bed, at the end of the adsorption step, e.g. as illustrated in Figure 4C by the $N_2$ concentration distribution in a uniform bed of LiX, average particle diameter of 1.6mm. By way of comparison, Figure 4D shows a similar distribution in a bed for the same type of adsorbent, but with an average particle diameter of 1.13mm.

The shorter MTZ of Figure 4D is obtained at the expense of a higher bed pressure drop, i.e. due to the smaller particle size. This problem can be significantly lessened by including the material of higher rate only in the MTZ region near the product end of the bed.

Unfortunately, however, sharp interface separating adsorbents of different average particle size creates a discontinuity to the motion of the mass transfer front. This discontinuity reduces the benefit of the higher rate adsorbent. While the mass transfer front in the longer equilibrium (bb1) region containing the slower adsorbent develops fully by the time it reaches the interface, the same is not true in the shorter zone containing the faster material.

While increases in mass transfer rate via smaller bead size can improve performance for rate limited regions of the adsorbent, as noted above these smaller bead sizes result in larger pressure gradients across the bed. These competing effects can be managed via the current invention by introducing a mixed transition region with a continuous variation in particle diameter distribution throughout the region. This allows the mass transfer front to sharpen gradually as it moves from the slow rate material into the higher rate adsorbent.

**Example of Bed configuration with a mixed transition region exploiting bead size variation:**

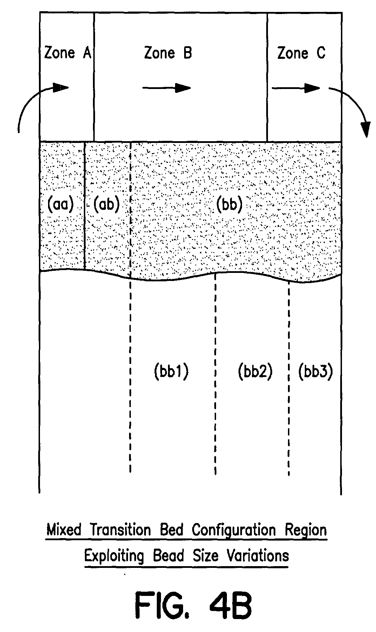

To demonstrate this embodiment, the adsorbent region bb of Fig. 4A is subdivided into three smaller regions, with the mixed transition region again sandwiched between two layers of adsorbent of uniform composition. This configuration is illustrated in Fig. 4B. Layers bb1 and bb3 represent the same adsorbent material but with each layer having a different average particle diameter. Region bb2, a graduated mixture of the adsorbents in bb1 and bb3, overlaps both the equilibrium and mass transfer zones. The lower section of region bb2 is 100% of the larger diameter material, and the size of the adsorbent in this region is graduated to a composition corresponding to 100% of the smaller diameter material at the opposite end of this region. This mixing of particles of different granulometry provides a means to manage the competing effects of pressure drop and adsorption rate as average particle size decreases. Thus, adsorbent efficiency may be maximized.

The size of the mixed transition region (bb2)is determined in response to specific mass transfer zone effects controlled by cycle specific adsorbent and process characteristics.

Preferably, the length of the transition region is established as the difference between the widths of the MTZs of the two materials in the discrete layers:

$$TR = MTZ_1 - MTZ_2$$

For the examples of Figures 4C and 4D, the overall bed length remained unchanged. For the same process operating conditions and $O_2$ product purity, $MTZ_1 - MTZ_2$ is approximately 7cm. This length of the Transition Region also satisfies the limiting condition established by Equation (1):

$$TR \geq 20 \left( \frac{1.6 + 1.13}{2} \right)$$
$$\geq 27.3mm$$

In the above example, it is not necessary that the discrete layers on each side of the transition region be composed of the same adsorbent material.

Packing Density:

Uniform high adsorbent packing density is important in the design of high efficiency adsorption processes. This high-density packing improves flow distribution within the adsorbent bed, critical to efficient operation. In addition high adsorbent bed density lowers the interparticle void fraction, yielding improved adsorption efficiency.

The examples above demonstrate some of the advantages of a mixed transition region. This invention is not intended to be limited to only those cases where the advantages of the examples are realized. On the contrary, the mixed transition concept is broadly useful in creating a region of unique properties obtained as a combination of the materials in the adjacent layers which may be applied as a means of tailoring any desired property of the adsorption system to achieve the benefits of the mixed transition region mentioned above. Thus the adsorbent materials in the layers to be separated by the mixed transition region may differ in composition, such as in physical properties (i.e. particle size, rate and/or equilibrium characteristics) or adsorbent type (e.g. NaX, LiX, NaA, etc.). The materials may differ based on the separations to be accomplished in each layer (e.g. NaX for $CO_2/H_2O$ and LiX for $N_2$) : Further the adjacent layers may themselves comprise mixtures of adsorbents as disclosed in commonly assigned US Patent 6,027,548. As indicated above an object of the present invention is to make significant improvements in adsorbent utilization and product recovery through enhancement of the rate characteristics of the adsorbent - primarily by increasing the effective diffusivity in the macropores of the adsorbent particle. The improved recovery achieved under the conditions of the invention also leads to reduced power consumption per unit of product produced. The invention is preferably directed at equilibrium-based adsorption separation processes with mass transport dominated by intraparticle pore diffusion. While the examples have been directed at air separation using a single main adsorbent, the invention is not limited to binary mixtures, nor to air as a feed nor to a single main adsorbent.

Further, when more than a single separation is to be achieved, it is contemplated to include one or more adsorbents as main adsorbents. In such a case, each adsorbent would be responsible for a different separation or a different level of the same separation. Multiple mass transfer zones may then be present in the process. An analysis similar to that described above would be performed for each of the adsorbent/adsorbate combinations where overcoming significant mass transfer resistance limitations would lead to overall improvements in process performance. Thus, the properties (particularly those related to the rate of adsorption) of the different adsorbent materials in the main adsorbent zone are selected to maximize all of the separations required of the process. Examples of such processes include the recovery of $H_2$ from $H_2/CO/CO_2/CH_4$ mixtures; prepurification, including the removal of $H_2O$ and $CO_2$ from air, separation of Ar from air or $N_2$ or $O_2$, drying of process streams and the recovery of $CO_2$ from flue gases or from $H_2$ PSA tail gas.

Type X zeolite adsorbents are suggested for air separation, most preferably highly-exchanged LiX as described by Chao (U.S. Pat. No. 4,859,217). Other type X materials with monovalent cations or mixed cations are also applicable to the present invention such as those suggested by Chao (U.S. Pat. No. 5,174,979). The invention is also applicable to any type of equilibrium-selective adsorbent material including, but not limited to, A-zeolite, Y-zeolite, chabazite, mordenite, clinoptilolite and various ion exchanged forms of these, as well as silica-alumina, alumina, silica, titanium silicates and mixtures thereof.

It should also be clear that the present invention may be practiced with various deployments of adsorbents in the main adsorbent zone, e.g. layers and mixtures of adsorbents of various types or of the same type but with varying adsorption and/or physical characteristics. For example, the enhanced rate concepts of this invention could be applied to the layered beds suggested by Ackley in co-pending EP Publication 0 875,279, as well as Notaro et al (USP 5,674,311) and Watson et al (USP 5,529,610).

Finally, a further improvement over the basic invention can be obtained by distributing the adsorbents with different rate properties to minimize pressure drop and/or mass transfer zone size. The selection of properties should be made in order to increase the rate of adsorption and minimize the fractional size(s) of the mass transfer zone(s) at the end of the adsorption step.

The present invention teaches a method to improve process performance by reducing mass transfer limitations without incurring any increase in process pressure drop. Bed depth and cycle time are reduced to compensate for increased specific pressure drop (pressure drop per unit depth of adsorbent) when particle size is reduced. There may be cases, however, where either a further reduction in pressure drop is desired and/or where the use of adsorbents with different rate properties is desirable or necessary. In such an embodiment, a poorer sorption rate-quality adsorbent (low mass transfer coefficient) could be used in the equilibrium zone and a higher sorption rate-quality version of the same adsorbent (high mass transfer coefficient) in the mass transfer zone.

It is further contemplated that the poorer rate-quality material in this latter condition could also be of smaller diameter. This would result in a configuration with regard to particle sizes in the adsorbent bed that is completely opposite to the prior art teachings. Thus when multiple adsorbents with different rate characteristics must be used, maintaining the adsorbent with the largest mass transfer rate coefficient in the mass transfer zone insures the best overall process performance.

Since the mass transfer zone forms initially and develops in what eventually becomes the equilibrium zone (at the end of the adsorption step), the rate of adsorption cannot be too low relative to that in a succeeding layer of adsorbent. This is because the leading edge of the mass transfer zone would erupt from the adsorber before the trailing edge crosses the boundary between the two materials. This would result in a reduced size of the equilibrium zone and increased size of the mass transfer zone and consequently, overall lower product recovery and/or purity.

This condition may be minimized by selecting the adsorbents and the mass transfer coefficients (MTC) of the most selective component such that the size of the mass transfer zone in the adsorbent of the lowest MTC is no more than twice that of the size of the mass transfer zone in the adsorbent of the highest MTC.

The problem may also be solved by distributing the adsorbents in such a way as to achieve a gradual increase in mass transfer coefficients (in contrast to discrete layers) from the inlet to the outlet of the adsorber. When multiple adsorption zones are contained in the main adsorbent for the purpose of multiple separations, it is appreciated that the concept of mass transfer coefficient gradients (either by discrete layers or by gradual change) can be applied individually to each included separation zone.

The concepts of this invention are not limited to any specific set of process conditions but may be applied over a wide range of process conditions, e.g. temperatures, pressures, feed velocities, etc. It is only necessary to evaluate the rate characteristics of the adsorbent at the process conditions of interest before applying these concepts in order to insure maximum process performance. Likewise, these concepts can be applied to single-bed as well as multi-bed processes operating with subatmospheric (VSA), transatmospheric (VPSA) or superatmospheric (PSA) cycles.

While the examples disclosed in this application use an eight-step cycle, the benefits of the invention may also apply to simpler cycles comprising fewer steps and more complex cycles comprising additional steps.

The enhanced-rate concepts described here are not limited to any particular adsorber configuration and can be effectively applied to axial flow, radial flow, lateral flow, etc. adsorbers. The adsorbent may be constrained or unconstrained within the absorber vessel.

The benefits of the invention may also be obtained in cycles in which the primary product is the more selectively adsorbed component (e.g. $N_2$) or in cycles wherein both the more and less strongly held component are recovered as product.

While the examples above contains only a single mixed region, one skilled in the art will appreciate that several mixed regions may also be applied depending upon the separation problem to be solved.

Further, the invention is applicable to pressure swing adsorption and/or temperature swing adsorption systems having one or more beds and is not dependent upon a particular gas separation or process cycle.

**Apparatus for loading a bed with a mixed transition region.**

As described above, there are several adsorbent and process benefits that result from a bed configuration incorporating a mixed adsorbent transition region between layered adsorbents. Prior art loading apparatus designed to handle layers have aimed at creating a sharp interface between the layers. The methods of dense-loader systems described in U.S. Patents 5,324,159 and 5,836,362, incorporated herein by reference, for axial and radial beds are improved in the present invention to generate mixed adsorbent transition regions. The scope of this invention further includes an apparatus to load the adsorbent bed with these mixed transition regions.

Axial bed loader:

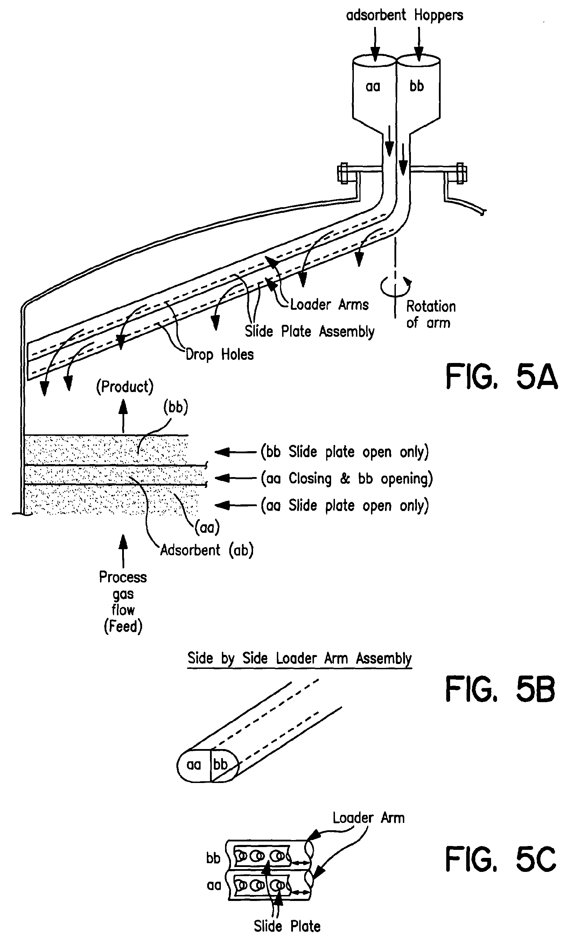

The bed loader described in patent 5,324,159 is modified by this invention to add a separate loader arm channel for each material. A sliding valve plate varies the effective hole-size in each loader arm channel. Figs. 5A-5C show this loader system. The hole-size is variable during loading by adjusting the valve plate shown in Fig. 5C, thereby affecting the flow rate of each specific adsorbent material from its respective channel (see Fig. 5B). This control is employed during the loading process to achieve the desired bed composition at each region in the bed, as the loading arm is rotated over the bed. The composition at any region can be controlled from 0% - 100% as the bed is loaded from the bottom to the top in the vertical position.

Radial bed loader:

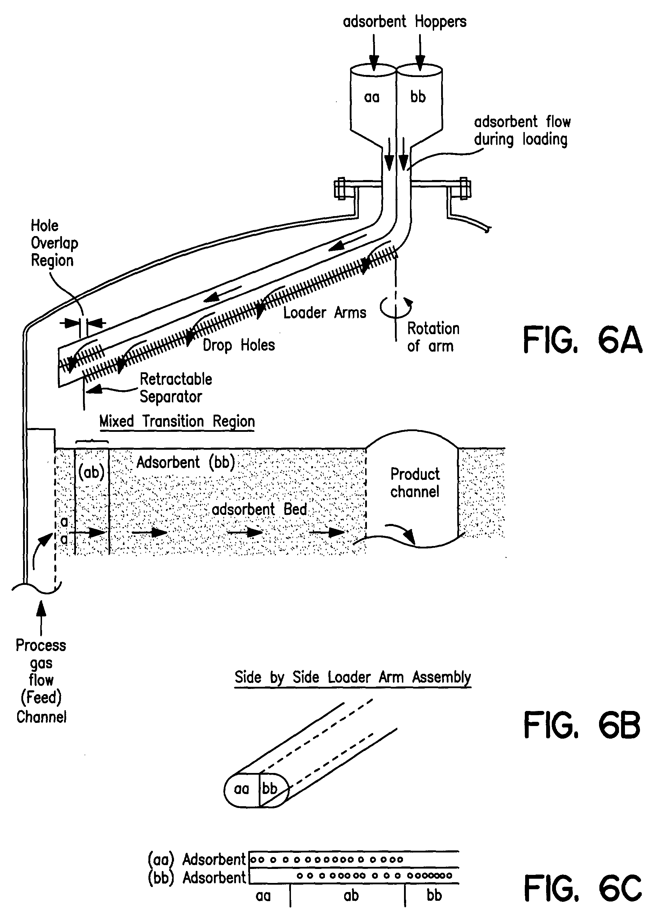

The radial bed loader described in patent 5,836,362 is modified by this invention to add features designed to control the adsorbent composition within the mixed region. Figs. 6A-6C show this loader assembly, where control of adsorbent loading is accomplished by the following means:

    1) adjusting the drop height of the material;
    2) adjusting the loading rate flux by varying:

- hole-size, rotational speed of the loader arm, adsorbent granulometry (average particle size) ;
- length of the partition plate suspended from the arm;

    3) the amount of adsorbent overlap in the different loader arms;
    4) the hole distribution within a loader arm.

Small transition regions:

In applications where the mixed transition region is relatively small, i.e., nominally 2-10cm in length, the composition is controlled by the following means: 1) adjusting the drop height of the material, 2) varying the adsorbent loading rate flux by adjusting the hole size, rotational speed of the loader arm and/or the bead size 3) adjusting the length of the partition plate suspended from the arm.

In order to achieve a desired graduated composition in the small transition region, important loading relationships have been identified.

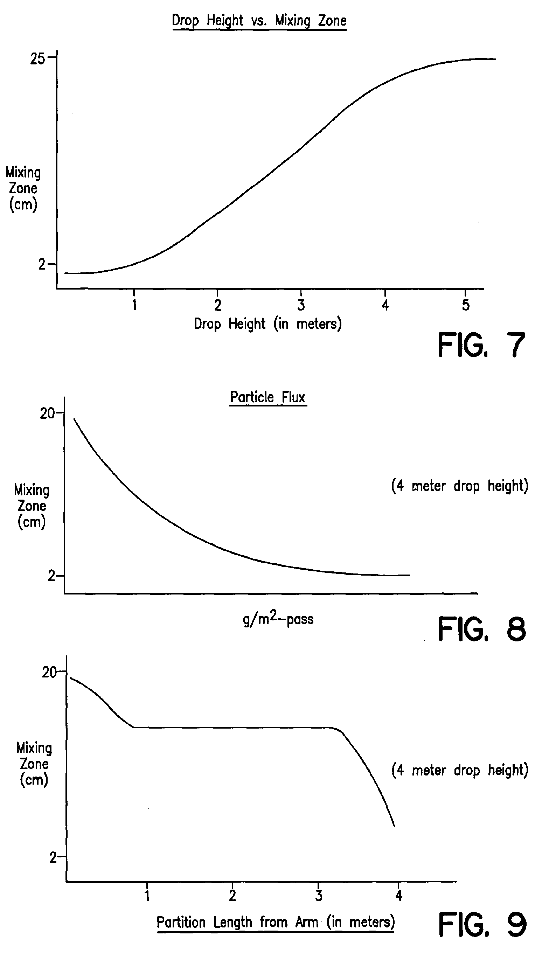

Fig. 7 shows the relationship between the drop height and mixed transition region thickness. One major factor affecting the thickness of the mixed region is the bouncing of a fraction of the adsorbent particles as they impact upon the surface of the stationary particles at the top of the bed during loading. This bouncing is a result of the energy contained within the falling particles. Increasing the drop height increases both the energy of the particles and the thickness of the mixed layer.

Fig. 7 shows that a mixed region as small as ~2cm can be obtained with a drop height of about 1m. As the drop height is extended to about 8m, the transition region extends to about 25cm.

Fig. 8 shows the relationship between loading flux (described in units of grams adsorbent/$m^2$ bed surface area per revolution of the loading arm) and the mixed transition region thickness. As stated earlier, some of the falling adsorbent bounces off the stationary adsorbent and is dispersed in random directions a distance influenced by the energy of the particle and the specific contact surface between the particles.

Increasing loading flux increases the interference between the bouncing particles, as well as between these particles and those falling from the loading arm. As a result, the dispersion zone is reduced and, as discussed in US Patent No. 5,324,159, the random packing density is reduced; (conversely with decreased loading flux and, consequently, decreased interference between the bouncing particles, a random, more dense, packing results). This loading flux vs. thickness of the dispersion zone relationship is shown in Fig. 8 for a nominal drop height of 4m. The loading flux is increased by employing larger hole sizes, slower arm rotation speeds, and smaller particles.

Fig. 9 shows the relationship between the partition length and the mixed transition region thickness for a nominal 4m drop height. The adsorbent material exiting the holes in the loading arm has some modest radial velocity associated with its trajectory, and thereby generates a wider mixed region. The particle deflector is used to reduce this component of velocity and thereby reduce the mixing zone width.

The deflector plate can also be extended to a position just above the loaded adsorbent bed surface. This extended particle baffle can control or eliminate the bouncing effect responsible for dispersion at the top surface of the bed. Control of this length can reduce the transition region to a thickness of ~2cm for very high drop heights.

Large transition regions:

In applications where a large mixed region is desired exceeding 15 - 20cm, the radial bed loader arm is designed with an overlap in the hole pattern for each material to be loaded. Fig. 8C shows a loader arm with the overlapped holes along with the suspended distribution plate. The sizing and spacing of these overlapped holes will determine the mixture composition at the center sections of these relative large mixed transition layers. It will be appreciated that materials being fed to the loader arm may be premixtures of individual adsorbents, thereby providing great flexibility in achieving a wide range of possible adsorbent compositions in the mixed transition region.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

**Claims**

1. An adsorbent bed for use in separating one or more components of a gas mixture from the gas mixture said adsorbent bed comprising:

   a first adsorbent region comprising a first adsorbent;
   a second adsorbent region comprising a second adsorbent; and
   a third adsorbent region positioned between said first adsorbent region and said second adsorbent region, said third region comprising a transition zone of a mixture of said first adsorbent and second adsorbent that varies in composition across said region.

2. The adsorbent bed as recited in claim 1, wherein said transition zone exhibits a graduated variation of said mixture from one said adsorbent region to another said adsorbent region.

3. The adsorbent bed as recited in claim 1, wherein said first adsorbent exhibits a different average particle size material from the average particle size of said second adsorbent.

4. The adsorbent bed as recited in claim 1, wherein said third region has a minimum thickness of at least 20 particle diameters.

5. The adsorbent bed as recited in claim 1, further comprising at least one additional adsorbent region comprising a third adsorbent.

6. The adsorbent bed as recited in claim 5, further comprising at least one additional mixed transition region are added between said additional regions of adsorbents.

7. The adsorbent bed as recited in claim 1, wherein said third adsorbent region exhibits a percentage of said first adsorbent of from 100% to 0% in a direction from said first region to said second region and a percentage of said second adsorbent of from 100% to 0% in a direction from said second region to said first region.

8. The adsorbent bed as recited in claim 1, wherein said adsorbent bed is an axial or radial bed.

9. Apparatus for loading multiple adsorbents into a bed, comprising:

   feed tube means for carrying multiple adsorbents to said bed;
means for moving said feed tube means with respect to said bed; and
means for feeding said multiple adsorbents during a loading action to create a mixed adsorbent region between a first adsorbent layer and a second adsorbent layer.

10. The apparatus as recited in claim 9, wherein said feed tube means rotates about a central axis and comprises at least a first channel and a second channel and said means for feeding comprises a set of apertures in an overlap region along a length of said first channel and second channel so that said first adsorbent in said first channel and said second adsorbent in said second channel mix as they respectively exit from said set of apertures.

Typical VPSA Cycle Step Diagram

Step #1 Raising pressure feed
with overlap equalization

Step #2 Raising pressure feed with
overlap product pressurization

Step #3 Raising pressure feed

Step #4 Constant pressure feed with
product make

Step #5 Constant pressure feed with
make product and purge

Step #6 Falling pressure equalization

Step #7 Falling pressure evacuation with
overlap equalization

Step #8 Falling pressure evacuation

Step #9 Falling pressure evacuation

Step #10 Falling pressure evacuation

Step #11 Constant pressure evacuation
with oxygen purge

Step #12 Raising pressure evacuation
with overlap equalization

A          B

# FIG. IA

Typical VPSA Process Conditions

| Step description | Step time seconds | Start Pressure | End Pressure |
|---|---|---|---|
| Step #1<br>Raising pressure feed<br>with overlap equalization | 2.0 | 8.85 | 13.8 |
| Step #2<br>Raising pressure feed with<br>overlap product pressurization | 3.0 | 13.8 | 18.2 |
| Step #3<br>Raising pressure feed | 3.0 | 18.2 | 20.8 |
| Step #4<br>Constant pressure feed with<br>make product | 1.0 | 20.8 | 20.8 |
| Step #5<br>Constant pressure feed with<br>make product/purge | 2.5 | 20.8 | 20.9 |
| Step #6<br>Falling pressure equalization | 1.5 | 20.9 | 17.7 |
| ********half cycle******** | | | |
| Step #7<br>Falling pressure evacuation with<br>overlap equalization | 2.0 | 17.7 | 12.3 |
| Step #8 & #9 & #10<br>Falling pressure evacuation | 7.0 | 12.3 | 7.45 |
| Step #11<br>Constant pressure evacuation<br>with oxygen purge | 2.5 | 7.45 | 7.45 |
| Step #12<br>Raising pressure evacuation<br>with overlap equalization | 1.5 | 7.45 | 8.65 |

# FIG. IB

Bed Adsorption Zones

A) Purification
B) Equilibrium
C) Rate Controlled
   (mass transfer front)

FIG. 2

Average Bed Temperature Profile

FIG. 3

Bed Configuration

Bed Laying and Mixed Transition Region

(aa) Uniform adsorbent composition
layer a

(bb) Uniform adsorbent composition
layer b

(ab) Gradual mixed transition region

Zone A    Zone B    Zone C

Bed Cross-Section

(aa)  (ab)    (bb)

NaX  (5–10% Bed Length)

NaX+LiX  (10–20% Bed Length)

LiX  (70–80% Bed Length)

# FIG. 4A

Zone A  Zone B  Zone C

(aa) (ab)  (bb)

(bb1)  (bb2)  (bb3)

Mixed Transition Bed Configuration Region
Exploiting Bead Size Variations

FIG. 4B

N$_2$ Concentration Distribution
(end of adsorption)

FIG. 4C

N$_2$ Concentration Distribution
(end of adsorption)

FIG. 4D

adsorbent Hoppers

aa    bb

Rotation of arm

Loader Arms

Slide Plate Assembly

Drop Holes

(Product)

(bb)

(bb Slide plate open only)

(aa Closing & bb opening)

(aa Slide plate open only)

(aa)

Adsorbent (ab)

Process gas flow (Feed)

FIG. 5A

Side by Side Loader Arm Assembly

aa bb

FIG. 5B

Loader Arm

bb

aa

Slide Plate

FIG. 5C

FIG. 6A

FIG. 6B

FIG. 6C

Drop Height vs. Mixing Zone

FIG. 7

Particle Flux

(4 meter drop height)

FIG. 8

(4 meter drop height)

Partition Length from Arm (in meters)

FIG. 9